# EUROPEAN PATENT APPLICATION

(11) **EP 2 952 731 A1**
(43) Date of publication of application: **09.12.2015**
(21) Application number: 15169460.1
(22) Date of filing: 27.05.2015
(51) Int. Cl.: F02N 11/04, B60W 10/08, F02N 11/00, F02N 19/00, F02B 63/04, F02N 15/02, F16H 1/00, F16D 41/067

(54) **ENGINE UNIT PROVIDED WITH A STARTER-GENERATOR AND AN AUXILIARY STARTER MOTOR FOR STARTING A STRADDLE-TYPE VEHICLE**

(30) Priority: 03.06.2014 JP 2014114616
(71) Applicant: Yamaha Hatsudoki Kabushiki Kaisha, Iwata-shi, Shizuoka-ken 438 (JP)
(72) Inventor: Sakai, Kouji, Shizuoka, 438-8501 (JP)
(74) Representative: Zimmermann, Tankred Klaus

(57) **Abstract**

An engine unit (10) includes an engine (200), an ISG (300) (Integrated Starter Generator) and an auxiliary motor (400). The ISG rotates a crankshaft (210) in a forward direction after rotating the crankshaft (210) in a reverse direction during start-up of the engine (200). The auxiliary motor (400) is connected to the crankshaft (210) via a reduction gear (450) and a clutch mechanism (500) and rotates the crankshaft (210) in at least the reverse direction during the start-up of the engine (200). In both of the forward and reverse directions, the clutch mechanism (500) can be switched between a state in which rotational force of the auxiliary motor (400) is transmitted to the crankshaft (210) and a state in which the rotational force of the auxiliary motor (400) is not transmitted to the crankshaft (210).

## Description

### BACKGROUND OF THE INVENTION

### Field of the Invention

The present invention relates to an engine unit and a straddle-type vehicle including the engine unit.

### Description of Related Art

In recent years, in straddle-type vehicles such as motorcycles, there is a technique in which stop and re-start of the engine are automatically performed for idling stop. In this case, assurance of silence during the re-start of the engine is required in order to reduce an uncomfortable feeling of a driver. Therefore, an integrated starter generator (ISG) having a function of a starter motor is used (See JP 2004-124878 A, for example).

### BRIEF SUMMARY OF THE INVENTION

An object of the present invention is to provide an engine unit and a straddle-type vehicle in which an increase in size of an integrated starter generator is inhibited and power generation efficiency of the integrated starter generator is improved.

This object is achieved by an engine unit according to claim 1.

The invention is based on the following findings. Because the ISG is directly attached to a crankshaft not via a reduction gear such as gears, mechanical sound caused by the reduction gear is not generated during start-up, and silence is enhanced. On the other hand, because the reduction gear is not used, it is necessary that the ISG itself generates a large torque in order to start the engine. Thus, an increase in size of the ISG becomes a problem. Further, in the ISG, when performance as the starter motor is pursued, efficiency as the generator is reduced.
(1) An engine unit according to one aspect of the present invention includes an engine, an integrated starter generator that is provided at a crankshaft of the engine and has a function for rotating the crankshaft and a function for generating electric power by rotation of the crankshaft, and a motor for rotating the crankshaft, wherein the integrated starter generator rotates the crankshaft in a forward direction after rotating the crankshaft in a reverse direction during start-up of the engine, the motor is connected to the crankshaft via a reduction gear and a clutch mechanism and rotates the crankshaft in at least the reverse direction during the start-up of the engine, and the clutch mechanism can be switched between a state in which rotational force of the motor in the forward direction is transmitted to the crankshaft and a state in which the rotational force of the motor in the forward direction is not transmitted to the crankshaft, and can be switched between a state in which rotational force of the motor in the reverse direction is transmitted to the crankshaft and a state in which the rotational force of the motor in the reverse direction is not transmitted to the crankshaft.
   In this engine unit, the integrated starter generator is provided at the crankshaft, and the motor is connected to the crankshaft via the reduction gear and the clutch mechanism. During the start-up of the engine, the crankshaft is rotated in the forward direction after being rotated in the reverse direction by the integrated starter generator. Further, the crankshaft is rotated in at least the reverse direction by the motor. In this case, because the crankshaft is auxiliarily rotated by the motor, a torque, which is required of the integrated starter generator, is small as compared to a case in which the integrated starter generator independently rotates the crankshaft. Thus, an increase in size of the integrated starter generator is inhibited, and power generation efficiency of the integrated starter generator is improved.
   Further, because the crankshaft is rotated in the forward direction after being rotated in the reverse direction, the crank angle is likely to exceed an angle corresponding to a compression top dead center. In this case, in both of the forward and reverse directions, presence and absence of transmission of the rotational force between the motor and the crankshaft are switched by the clutch mechanism. Thus, the motor is prevented from being rotational resistance to the crankshaft. Therefore, the rotation speed of the crankshaft can be smoothly increased.
(2) The engine unit may have a casing that stores the crankshaft and the clutch mechanism, the clutch mechanism may include an input rotation member that is rotated in conjunction with rotation of the motor, a fixing member that is fixed to the casing, and a transmitter that is provided to be rotated together with the input rotation member while receiving rotational resistance from the fixing member, and the transmitter may be operated during rotation of the input rotation member in the forward direction to prevent rotation of the crankshaft in the reverse direction relative to the input rotation member by the rotational resistance that is applied from the fixing member, and not to prevent rotation of the crankshaft in the forward direction relative to the input rotation member, and may be operated during rotation of the input rotation member in the reverse direction to prevent the rotation of the crankshaft in the forward direction relative to the input rotation member by the rotational resistance that is applied from the fixing member, and not to prevent the rotation of the crankshaft in the reverse direction relative to the input rotation member.
   In this case, the input rotation member and the transmitter are rotated in conjunction with the rotation of the motor. The rotational resistance is applied to the transmitter from the fixing member that is fixed to the casing. Thus, the transmitter limits the direction in which the crankshaft can be rotated relative to the input rotation member.
   Thus, during the rotation of the crankshaft in both of the forward and reverse directions, when the rotation speed of the crankshaft becomes higher than that of the input rotation member, the crankshaft is rotated relative to the input rotation member. Thus, the motor is prevented from being the rotational resistance to the crankshaft, so that the rotation speed of the crankshaft is smoothly increased.
(3) The input rotation member may include a first gear, a second gear may be attached to an output shaft of the motor, and the first gear may be engaged with the second gear such that the reduction gear is constituted.
   In this case, it is possible to supply a large torque to the crankshaft via the clutch mechanism from the motor without increasing the number of components.
(4) The engine unit may further include a controller that controls the motor and the integrated starter generator during the start-up of the engine such that the crankshaft is rotated in the forward direction after being rotated in the reverse direction by at least the motor in a case in which a predetermined condition is satisfied, and controls the motor and the integrated starter generator during the start-up of the engine such that the crankshaft is rotated in the forward direction after being rotated in the reverse direction by the integrated starter generator in a case in which the condition is not satisfied.
   In this case, the motor can be auxiliarily used when startability of the engine is low such as during cold start-up and the like, and the crankshaft can be rotated by only the integrated starter generator when the startability of the engine is high. Thus, silence, which is acquired when the startability of the engine is high, is ensured.
(5) The engine unit may further include a detector that detects a rotation speed of the crankshaft, and a controller that controls the motor and the integrated starter generator during the start-up of the engine such that the crankshaft is rotated by at least the motor in a period in which the rotation speed detected by the detector is smaller than a predetermined threshold value, and controls the motor and the integrated starter generator during the start-up of the engine such that the crankshaft is rotated by the integrated starter generator after the rotation speed detected by the detector reaches the predetermined threshold value.
   When the rotation speed of the crankshaft is low, a large torque is required in order to rotate the crankshaft. However, when the rotation speed of the crankshaft is high, the large torque is not required in order to rotate the crankshaft. Therefore, when the rotation speed of the crankshaft is low, the motor is used. Further, when the rotational speed to the crankshaft is high, the motor is not used, and only the integrated starter generator is used. In this manner, silence is enhanced by limitation to duration of use of the motor.
(6) The motor may be a direct-current motor and connected to a power supplier through a power circuit having two electrodes, and a relay may be provided at only one electrode of the power circuit, and electrical power may be supplied from the power supplier to the motor such that the motor is rotated in the reverse direction by turning on of the relay.
   In this case, a configuration of the power circuit between the motor and the power supplier is simplified. Thus, the size of the power circuit can be reduced, and the control of the relay becomes easier.
(7) A straddle-type vehicle according to another aspect of the present invention includes a main body having a drive wheel, and the above-mentioned engine unit that generates driving force for moving the main body.
   In this straddle-type vehicle, because the above-mentioned engine unit is used, an increase in size of the integrated starter generator is inhibited, and power generation efficiency of the integrated starter generator is improved. Further, the rotation speed of the crankshaft can be smoothly increased during the start-up of the engine.

### BRIEF DESCRIPTION OF THE SEVERAL VIEWS OF THE DRAWING

Fig. 1 is a schematic side view showing the schematic configuration of a motorcycle according to embodiments of the present invention;
Fig. 2 is a schematic diagram for explaining the schematic configuration of an engine unit;
Fig. 3 is a partially enlarged cross sectional view of the engine unit;
Fig. 4 is an enlarged cross sectional view for explaining details of a clutch mechanism;
Fig. 5 is an enlarged cross sectional view for explaining the details of the clutch mechanism;
Figs. 6(a) to 6(d) are schematic diagrams for explaining an operation of the clutch mechanism;
Figs. 7(a) to 7(d) are schematic diagrams for explaining the operation of the clutch mechanism;
Fig. 8 is a time chart for explaining switching of the clutch mechanism during a swing-back operation;
Fig. 9 is a flow chart of a first example of an engine start-up process;
Fig. 10 is a flow chart of a second example of the engine start-up process;
Fig. 11 is a flow chart of a third example of the engine start-up process; and
Fig. 12 is a schematic view showing a connection example of an auxiliary motor to a battery.

### DESCRIPTION OF THE PREFERRED EMBODIMENTS

An engine unit and a straddle-type vehicle according to embodiments of the present invention will be described below with reference to drawings. In the following description, the front, the rear, the left, and the right respectively mean the front, the rear, the left, and the right based on a viewpoint of a rider of a motorcycle.

### (1) Motorcycle

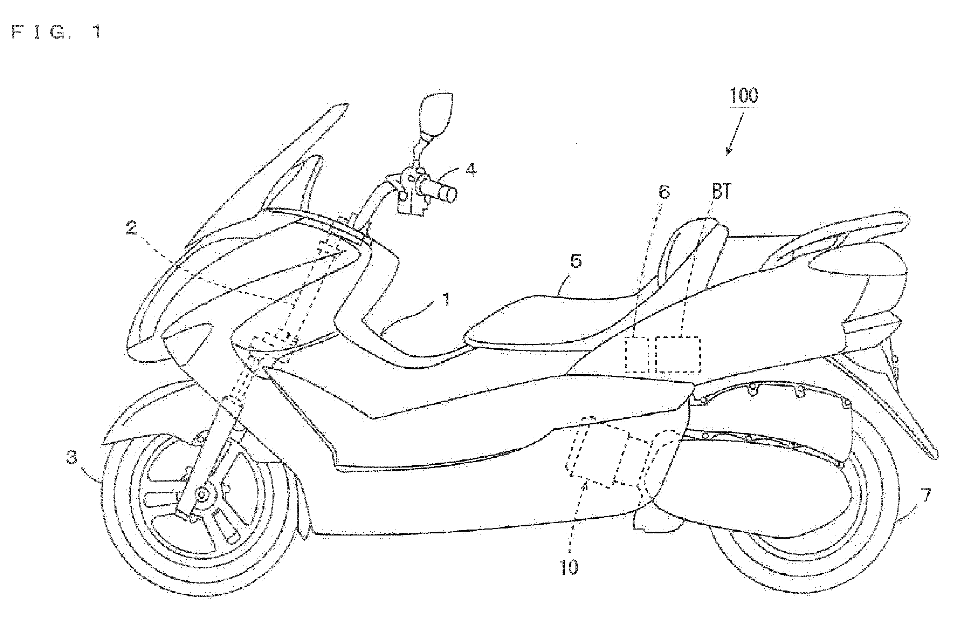

Fig. 1 is a schematic side view showing the schematic configuration of the motorcycle according to the embodiments of the present invention. In the motorcycle 100 of Fig. 1, a front fork 2 is provided at the front of a vehicle body 1 to be swingable to the left and right. A handle 4 is attached to the upper end of the front fork 2, and a front wheel 3 is attached to the lower end of the front fork 2 to be rotatable.

A seat 5 is provided at the upper portion of substantially the center of the vehicle body 1. The engine unit 10 is provided below the seat 5. The engine unit 10 includes a controller 6. Further, a battery BT is provided below the seat 5. A rear wheel 7 is attached to a lower rear end of the vehicle body 1 to be rotatable. The rotation of the rear wheel 7 is driven by power that is generated by the engine unit 10.

### (2) Schematic Configuration of Engine Unit

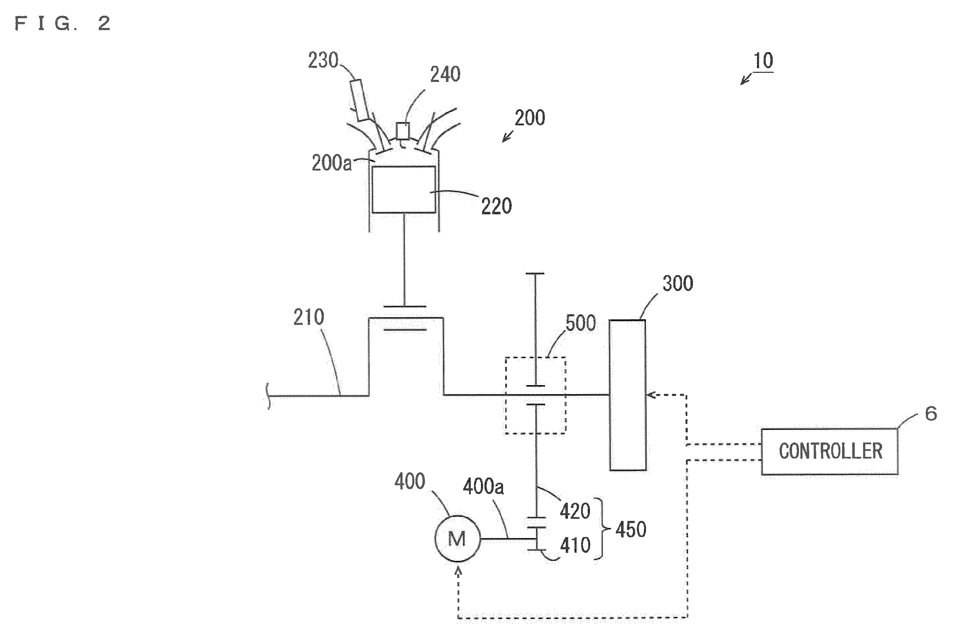

Fig. 2 is a schematic diagram for explaining the schematic configuration of the engine unit 10. As shown in Fig. 2, the engine unit 10 includes an engine 200, an ISG (Integrated Starter Generator) 300, an auxiliary motor 400 and the controller 6.

The engine 200 includes a crankshaft 210, a piston 220, a fuel injection device 230 and an ignition device 240. Fuel, which is injected by the fuel injection device 230, is mixed with air and led to a combustion chamber 200a. An air-fuel mixture in the combustion chamber 200a is ignited by the ignition device 240, so that the piston 220 is driven. Reciprocating motion of the piston 220 is transformed into rotational motion of the crankshaft 210. Rotational force of the crankshaft 210 is transmitted to the rear wheel 7 (Fig. 1), so that the rear wheel 7 is driven.

The ISG 300 is provided at one end of the crankshaft 210, and drives to rotate the crankshaft 210 in a forward or reverse direction. The forward direction is a rotation direction of the crankshaft 210 during a normal operation of the engine 200, and the reverse direction is the opposite direction to the forward direction.

The auxiliary motor 400 is connected to the crankshaft 210 via a pinion gear 410, a driven gear 420 and a clutch mechanism 500. The number of teeth of the driven gear 420 is larger than the number of teeth of the pinion gear 410. The pinion gear 410 is attached to an output shaft 400a of the auxiliary motor 400. The pinion gear 410 is engaged with the driven gear 420, so that a reduction gear 450 is constituted. The auxiliary motor 400 supports the driving of the crankshaft 210 by the ISG 300.

In the present embodiment, a swing-back operation of the crankshaft 210 is performed during start-up of the engine 200. Specifically, the crankshaft 210 is rotated in the forward direction after being rotated in the reverse direction within a constant angular range. In this case, the crank angle is changed to be away from an angle corresponding to a compression top dead center by the rotation of the crankshaft 210 in the reverse direction. Thus, the crankshaft 210 is likely to be accelerated during the rotation of the crankshaft 210 in the forward direction, and the crank angle is likely to exceed an angle corresponding to a first compression top dead center. The air-fuel mixture may be combusted in the combustion chamber 200a when the crankshaft 210 is rotated in the reverse direction in order to increase the rotational force of the crankshaft 210 in the forward direction.

The start-up of the engine 200 is performed when a starter switch (not shown) is turned on, for example. Further, when travelling of the motorcycle 100 is temporarily stopped, stop and re-start of the engine 200 may be automatically performed. In this case, the engine 200 is automatically stopped when a predetermined idling stop condition is satisfied, and the engine 200 is automatically restarted when a predetermined idling stop release condition is satisfied.

The idling stop condition includes a condition that is related to at least one of a throttle opening, a vehicle speed and a rotation speed of the crankshaft 210, for example. The idling stop release condition includes an operation of an accelerator grip, turning off of a brake switch or a reduction in voltage of the battery BT (Fig. 1), for example. Hereinafter, a state in which the engine 200 is stopped by a satisfaction of the idling stop condition is referred to as an idling stop state.

The controller 6 includes a CPU (Central Processing Unit) and a memory, for example, controls the fuel injection device 230 and ignition device 240 of the engine 200, and controls the auxiliary motor 400 and the ISG 300. As the controller 6, a microcomputer may be used instead of the CPU and the memory.

### (3) Details of ISG and Auxiliary Motor

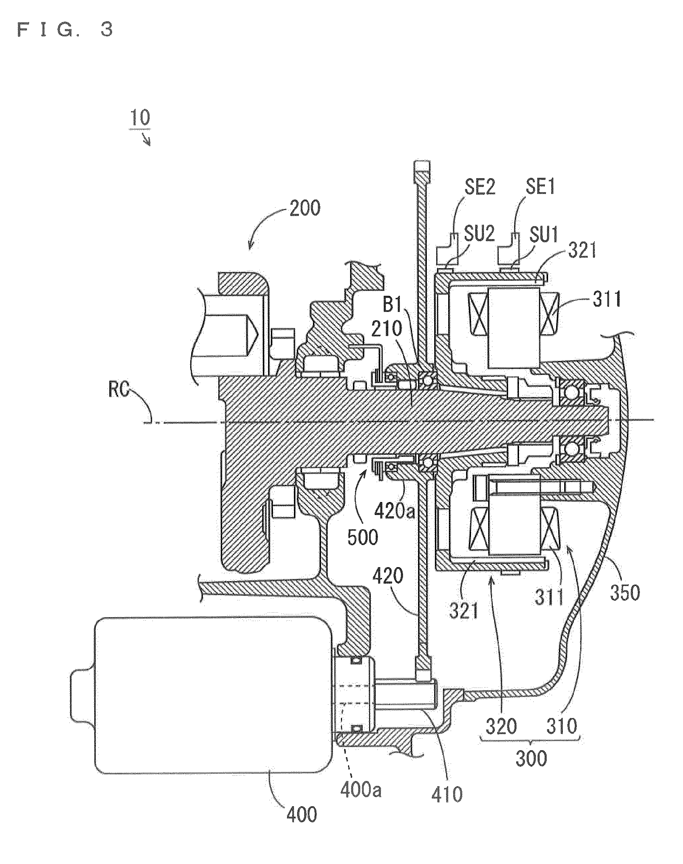

Fig. 3 is a partially enlarged cross sectional view of the engine unit 10. In the following description, a radial direction centered at a rotational center axis RC of the crankshaft 210 is referred to as an axial radial direction, and a circumferential direction about the rotational center axis RC is referred to as an axial circumferential direction. Further, a direction, which is directed away from the rotational center axis RC in the axial radial direction, is referred to as an outward radial direction.

As shown in Fig. 3, the ISG 300 includes a stator 310 and a rotor 320. The stator 310 is fixed to a casing 350, and includes a plurality of stator coils 311 that constitute a U phase, a V phase and a W phase. The plurality of stator coils 311 are arranged in the axial circumferential direction. The rotor 320 is fixed to the crankshaft 210, and includes a plurality of magnets 321. The plurality of magnets 321 are located in the outward radial direction of the stator 310, and arranged in the axial circumferential direction.

During the start-up of the engine 200, the ISG 300 functions as a motor. In this case, an electric current is supplied to the plurality of stator coils 311 of the stator 310 via the controller 6 from the battery BT of Fig. 1, whereby the rotor 320 is rotated relative to the stator 310. Thus, the rotation of the crankshaft 210 is driven. On the other hand, after a complete explosion of the engine 200, the ISG 300 functions as a generator. In this case, the rotation of the crankshaft 210 is driven by the engine 200, and the rotor 320 is rotated relative to the stator 310. Thus, electric power is generated, and the electric power is supplied to the battery BT via the controller 6 from the plurality of stator coils 311.

Detection subjects SU1, SU2 (subjects for detection) are provided on an outer peripheral surface of the rotor 320. The detection subjects SU1, SU2 are respectively made of a plurality of projections, for example. Crank angle sensors SE1, SE2 are provided to be opposite to the outer peripheral surface of the rotor 320. The crank angle sensors SE1, SE2 are fixed to the casing 350, and the detection subjects SU1, SU2 are rotated relative to the crank angle sensors SE1, SE2. The crank angle sensor SE1 detects the detection subject SU1, and supplies the detection result to the controller 6 of Fig. 2. The controller 6 controls the fuel injection device 230 and ignition device 240 of Fig. 2 based on the detection result of the crank angle sensor SE1. The crank angle sensor SE2 detects the detection subject SU2, and supplies the detection result to the controller 6 of Fig. 2. The controller 6 controls excitation timing (energization timing) of each stator coil 311 based on the detection result of the crank angle sensor SE2.

The auxiliary motor 400 is fixed to the casing 350. The output shaft 400a of the auxiliary motor 400 is arranged to be parallel to the rotational center axis RC of the crankshaft 210. The pinion gear 410, which is attached to the output shaft 400a, is engaged with the driven gear 420. The driven gear 420 has a cylindrical portion 420a, and the crankshaft 210 is inserted into the cylindrical portion 420a. A bearing B1 is arranged between an inner peripheral surface of the cylindrical portion 420a and an outer peripheral surface of the crankshaft 210. The rotational force, which is generated by the auxiliary motor 400, is transmitted from the pinion gear 410 to the driven gear 420. Thus, the driven gear 420 is rotated about the rotational center axis RC of the crankshaft 210.

The clutch mechanism 500 is configured to be switchable between a state in which the rotational force of the driven gear 420 is transmitted to the crankshaft 210 and a state in which the rotational force of the driven gear 420 is not transmitted to the crankshaft 210. Details of the clutch mechanism 500 will be described below.

### (4) Details of Clutch Mechanism

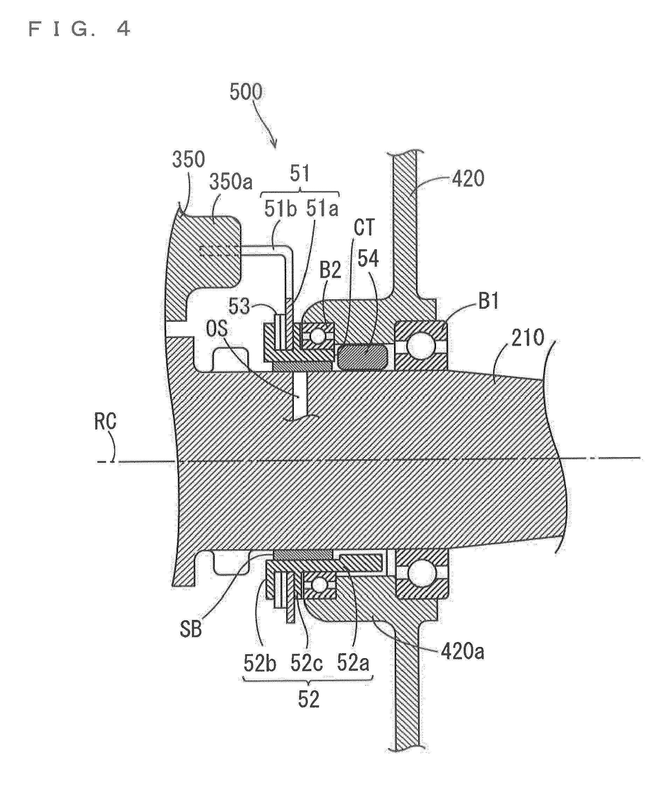

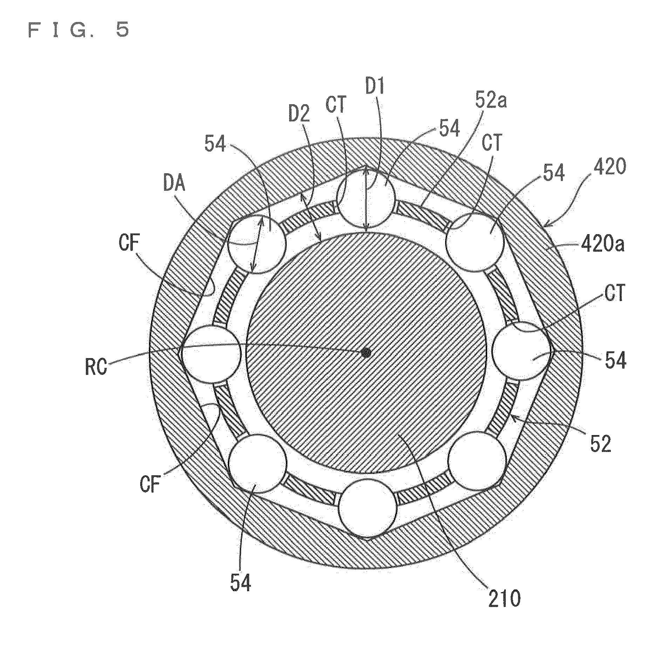

Figs. 4 and 5 are enlarged cross sectional views for explaining the details of the clutch mechanism 500. As shown in Fig. 4, the clutch mechanism 500 includes a fixing plate 51, a roller holder 52, an energizing member 53 and a plurality of rollers 54. Fig. 4 shows only one of the plurality of rollers 54.

The fixing plate 51 has a pressing portion 51 a and a projection 51 b. The pressing portion 51 a is annular and is provided in the outward radial direction of the crankshaft 210. The projection 51 b is provided to project in the outward radial direction from the outer periphery of the pressing portion 51 a and also to be bent at a right angle. A tip end of the projection 51 b is fixed to a plate fixing portion 350a that is provided in the casing 350.

The roller holder 52 has a cylindrical portion 52a, a flange portion 52b and a sliding portion 52c. The cylindrical portion 52a is provided to surround part of the outer peripheral surface of the crankshaft 210. A cylindrical plain bearing SB is fixed to an inner peripheral surface of the cylindrical portion 52a. An oil supply path OS is formed in a portion, of the crankshaft 210, which overlaps with the plain bearing SB. A lubricating oil is supplied to a space between an inner peripheral surface of the plain bearing SB and the outer peripheral surface of the crankshaft 210 through the oil supply path OS. Slipperiness between the roller holder 52 and the crankshaft 210 is ensured by the plain bearing SB.

Part of the cylindrical portion 52a is arranged inside of the cylindrical portion 420a of the driven gear 420. A bearing B2 is arranged between the cylindrical portion 52a and cylindrical portion 420a of the driven gear 420. The roller holder 52 and the driven gear 420 are rotatable relative to each other in the axial circumferential direction via the bearing B2.

The flange portion 52b is provided to project in the outward radial direction from one end of the cylindrical portion 52a outside of the cylindrical portion 420a of the driven gear 420. The sliding portion 52c is provided at a certain distance from the flange portion 52b to project in the outward radial direction from an outer peripheral surface of the cylindrical portion 52a.

The pressing portion 51 a of the fixing plate 51 is arranged between the flange portion 52b and the sliding portion 52c to come into contact with the sliding portion 52c. Further, the energizing member 53 is arranged between the pressing portion 51a and the flange portion 52b. The energizing member 53 is a wavy spring, for example. The pressing portion 51 a is energized by the energizing member 53 to be pressed against the sliding portion 52c.

As shown in Fig. 5, a cross section of the inner peripheral surface of the cylindrical portion 420a of the driven gear 420 is polygonal. The inner peripheral surface of the cylindrical portion 420a is constituted by a plurality of planes (hereinafter referred to as cam surfaces) CF. In the present example, the cross section of the inner peripheral surface of the cylindrical portion 420a is a regular octagon, and the inner peripheral surface of the cylindrical portion 420a is constituted by the eight cam surfaces CF. In the cylindrical portion 420a, a plurality of cutouts CT are formed in the cylindrical portion 52a of the roller holder 52 at equal angular intervals in the axial circumferential direction.

A substantially columnar roller 54 is arranged in each cutout CT between the inner peripheral surface of the cylindrical portion 420a of the driven gear 420 and the outer peripheral surface of the crankshaft 210. The width of each cutout CT in the axial circumferential direction is slightly larger than a diameter DA of a cross section of the roller 54.

In the axial radial direction, a maximum distance D1 between the outer peripheral surface of the crankshaft 210 and the inner peripheral surface of the cylindrical portion 420a is larger than the diameter DA of the cross section of the roller 54. The maximum distance D1 is a distance from the end of each cam surface CF and the outer peripheral surface of the crankshaft 210 in the axial radial direction. On the other hand, in the axial radial direction, a minimum distance D2 between the outer peripheral surface of the crankshaft 210 and the inner peripheral surface of the cylindrical portion 420a is smaller than the diameter DA of the cross section of the roller 54. The minimum distance D2 is a distance between the center portion of each cam surface CF and the outer peripheral surface of the crankshaft 210 in the axial radial direction.

Thus, the roller 54 does not pass between the center portion of each cam surface CF and the outer peripheral surface of the crankshaft 210, so that a range of movement of each roller 54 in the axial circumferential direction relative to the cylindrical portion 420a is limited. Thus, each roller 54 is moved in the axial circumferential direction in conjunction with the rotation of the cylindrical portion 420a in the axial circumferential direction.

### (5) Operation of Clutch Mechanism

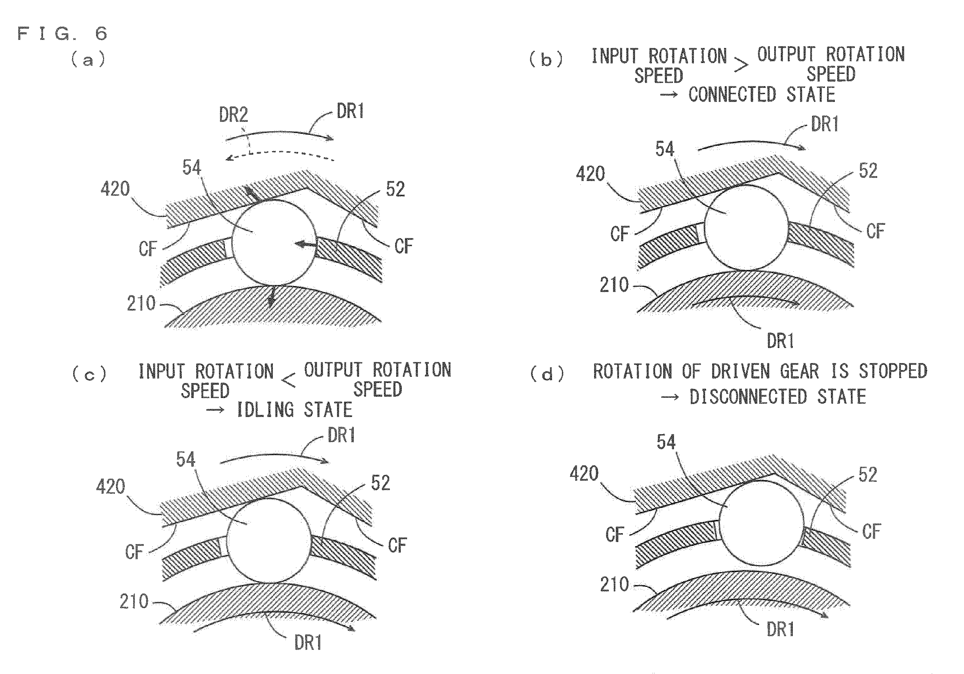

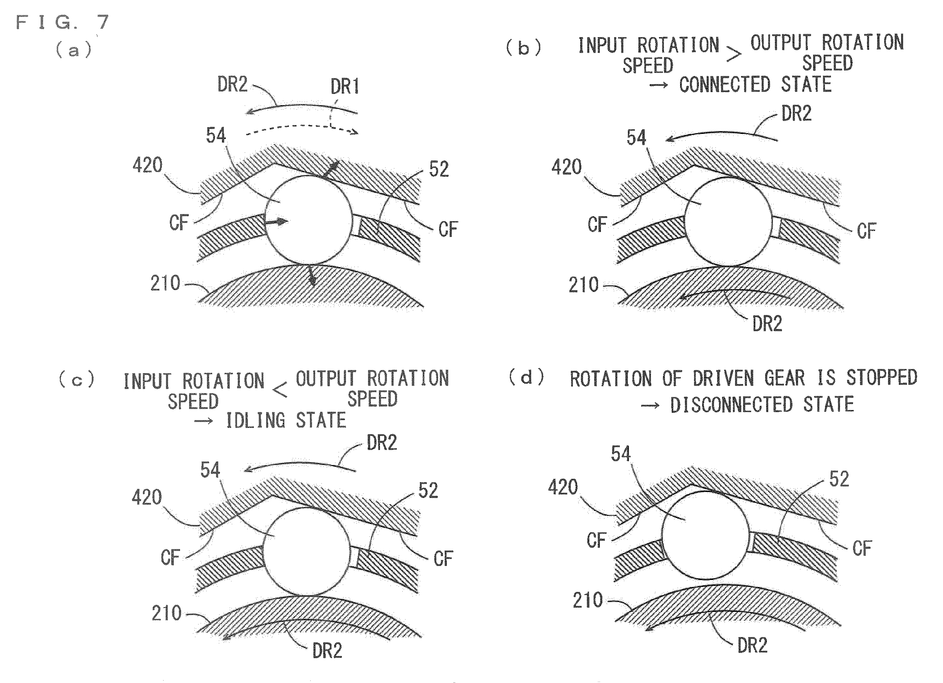

Figs. 6(a) to 7(d) are schematic diagrams for explaining the operation of the clutch mechanism 500. In Figs. 6(a) to 7(d), one roller 54 is shown, and parts of the respective cylindrical portion 420a, roller holder 52 and crankshaft 210 are shown. The other rollers 54 are operated similarly to the roller 54 of Figs. 6(a) to 7(d). Further, the driven gear 420 is rotated in the forward direction DR1 by the auxiliary motor 400 in the example of Figs. 6(a) to 6(d), and the driven gear 420 is rotated in the reverse direction DR2 by the auxiliary motor 400 in the example of Figs. 7(a) to 7(d).

In the following description, the rotation speed of the driven gear 420 and the rotation speed of the crankshaft 210, in a case in which the rotational force is assumed not to be transmitted between the crankshaft 210 and the driven gear 420, are respectively referred to as an input rotation speed and an output rotation speed. The input rotation speed is equivalent to the rotation speed of the driven gear 420 by the driving force of the auxiliary motor 400, and the output rotation speed is equivalent to the rotation speed of the crankshaft 210 by the driving force of other than the auxiliary motor 400 such as the engine 200, the ISG 300 and inertial force.

As shown in Fig. 6(a), when the driven gear 420 is rotated in the forward direction DR1 by the auxiliary motor 400 (Fig. 2), each roller 54 is moved in the forward direction DR1 while abutting against the cam surface CF of the driven gear 420 and the outer peripheral surface of the crankshaft 210. In this case, each roller 54 pushes the roller holder 52, so that the roller holder 52 is rotated in the forward direction DR1.

As described above, the pressing portion 51 a of the fixing plate 51 (Fig. 4) is pressed against the sliding portion 52c of the roller holder 52 (Fig. 4) by the energizing member 53 (Fig. 4). Therefore, when the roller holder 52 is rotated, friction is generated between the pressing portion 51a and the sliding portion 52c. The friction force is exerted as rotational resistance to the roller holder 52. Thus, a drag in the reverse direction DR2 is exerted on the roller 54 from the roller holder 52, so that the roller 54 is held being pressed against the cam surface CF and the outer peripheral surface of the crankshaft 210. In this case, the crankshaft 210 is prevented from being rotated in the reverse direction DR2 relative to the driven gear 420. On the other hand, the crankshaft 210 is not prevented from being rotated in the forward direction DR1 relative to the driven gear 420.

As shown in Fig. 6(b), when the output rotation speed of the crankshaft 210 in the forward direction DR1 is lower than the input rotation speed of the driven gear 420 in the forward direction DR1, the clutch mechanism 500 is in a connected state. In this case, the rotational force of the driven gear 420 in the forward direction DR1 is transmitted to the crankshaft 210, and the crankshaft 210 is integrally rotated with the driven gear 420 in the forward direction DR1.

As shown in Fig. 6(c), when the output rotation speed of the crankshaft 210 in the forward direction DR1 is higher than the input rotation speed of the driven gear 420 in the forward direction DR1, the clutch mechanism 500 is in an idling state. In this case, the rotational force is not transmitted between the driven gear 420 and the crankshaft 210, and the crankshaft 210 is rotated in the forward direction DR1 at a rotation speed that is higher than that of the driven gear 420 while the driven gear 420 is rotated in the forward direction DR1.

As shown in Fig. 6(d), in a case in which the rotation of the driven gear 420 by the auxiliary motor 400 (Fig. 2) is stopped while the crankshaft 210 is rotated, the rotation of the roller 54 and roller holder 52 is stopped. In this case, holding of the roller 54 by the roller holder 52 is released. Therefore, the roller 54 is moved away from the crankshaft 210 by force that is applied from the crankshaft 210. Thus, the clutch mechanism 500 enters a disconnected state, so that the crankshaft 210 is rotated in the forward direction DR1 without receiving rotational resistance by the driven gear 420.

Also when the driven gear 420 is rotated in the reverse direction DR2, the clutch mechanism 500 is similarly operated. As shown in Fig. 7(a), when the driven gear 420 is rotated in the reverse direction DR2 by the auxiliary motor 400 (Fig. 2), each roller 54 is moved in the reverse direction DR2 while abutting against the cam surface CF of the driven gear 420 and the outer peripheral surface of the crankshaft 210. In this case, each roller 54 pushes the roller holder 52, so that the roller holder 52 is rotated in the reverse direction DR2.

Friction is generated between the sliding portion 52c of the roller holder 52 (Fig. 4) and the pressing portion 51 a of the fixing plate 51 (Fig. 4), so that a drag in the forward direction DR1 is exerted on the roller 54 from the roller holder 52. Thus, the roller 54 is held being pressed against the cam surface CF and the outer peripheral surface of the crankshaft 210. In this case, the crankshaft 210 is prevented from being rotated in the forward direction DR1 relative to the driven gear 420. On the other hand, the crankshaft 210 is not prevented from being rotated in the reverse direction DR2 relative to the driven gear 420.

As shown in Fig. 7(b), when the output rotation speed of the crankshaft 210 in the reverse direction DR2 is lower than the input rotation speed of the driven gear 420 in the reverse direction DR2, the clutch mechanism 500 enters the connected state. In this case, the rotational force of the driven gear 420 in the reverse direction DR2 is transmitted to the crankshaft 210, so that the crankshaft 210 is integrally rotated with the driven gear 420 in the reverse direction DR2.

As shown in Fig. 7(c), when the output rotation speed of the crankshaft 210 in the reverse direction DR2 is higher than the input rotation speed of the driven gear 420 in the reverse direction DR2, the clutch mechanism 500 enters an idling state. In this case, the rotational force is not transmitted between the driven gear 420 and the crankshaft 210, and the crankshaft 210 is rotated in the reverse direction DR2 at a rotation speed that is higher than that of the driven gear 420 while the driven gear 420 is rotated in the reverse direction DR2.

As shown in Fig. 7(d), in a case in which the rotation of the driven gear 420 by the auxiliary motor 400 is stopped while the crankshaft 210 is rotated, the rotation of the roller 54 and roller holder 52 is also stopped. In this case, holding of the roller 54 by the roller holder 52 is released. Therefore, the roller 54 is moved away from the crankshaft 210 by force that is applied from the crankshaft 210. Thus, the clutch mechanism 500 enters the disconnected state, so that the crankshaft 210 is rotated in the reverse direction DR2 without receiving rotational resistance by the driven gear 420.

In this manner, in both of the forward and reverse directions DR1, DR2, when the input rotation speed is higher than the output rotation speed, the rotational force generated by the auxiliary motor 400 is transmitted to the crankshaft 210. Therefore, the crankshaft 210 is rotated by the auxiliary motor 400. On the other hand, in both of the forward and reverse directions DR1, DR2, when the output rotation speed becomes higher than the input rotation speed, the rotational force generated by the auxiliary motor 400 is not transmitted to the crankshaft 210. Therefore, the crankshaft 210 is not driven by the auxiliary motor 400, and the auxiliary motor 400 is prevented from being rotational resistance to the crankshaft 210.

### (6) Swing-back Operation

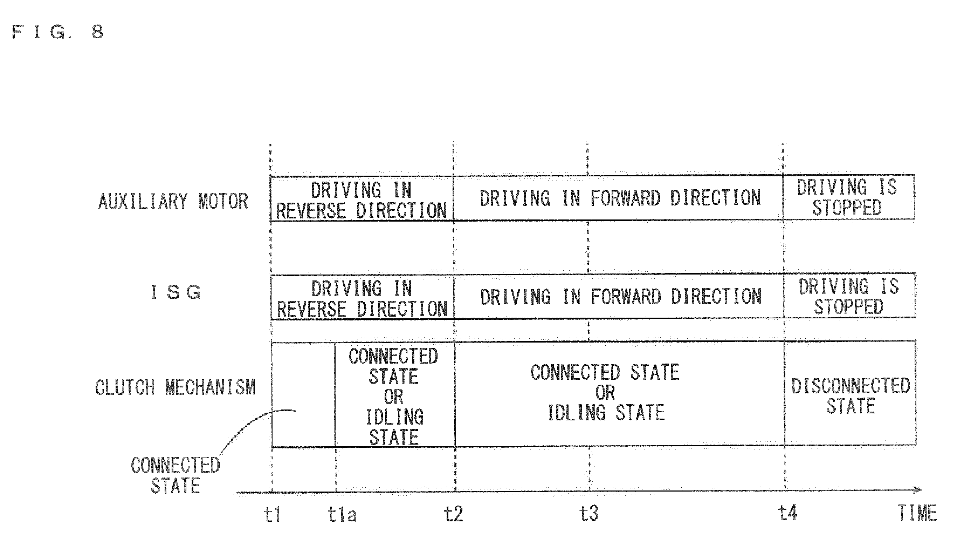

During the swing-back operation of the crankshaft 210, the clutch mechanism 500 is suitably switched among the above-mentioned connected state, idling state and disconnected state. Fig. 8 is a time chart for explaining switching of the clutch mechanism 500 during the swing-back operation. In Fig. 8, the abscissa indicates time. In the example of Fig. 8, the swing-back operation of the crankshaft 210 is performed using both of the auxiliary motor 400 and the ISG 300.

First, at a time point t1, the auxiliary motor 400 starts driving of the driven gear 420 (Fig. 3) in the reverse direction DR2, and the ISG 300 starts driving of the crankshaft 210 (Fig. 3) in the reverse direction DR2. Right after start of the driving of the driven gear 420 and crankshaft 210 (a period from the time point t1 to a time point t1 a), the input rotation speed of the driven gear 420 in the reverse direction DR2 is higher than the output rotation speed of the crankshaft 210 in the reverse direction DR2. Thus, as shown in Fig. 7(b), the clutch mechanism 500 is in the connected state, so that the crankshaft 210 is integrally rotated with the driven gear 420 in the reverse direction DR2.

In a case in which a certain time period has elapsed since the start of the driving of the driven gear 420 and crankshaft 210, the output rotation speed of the crankshaft 210 in the reverse direction DR2 is increased by inertial force. Therefore, after the time point t1 a, the output rotation speed of the crankshaft 210 in the reverse direction DR2 is sometimes higher than the input rotation speed of the driven gear 420 in the reverse direction DR2. In that case, as shown in Fig. 7(c), the clutch mechanism 500 is in the idling state, so that the crankshaft 210 is rotated in the reverse direction DR2 at a rotation speed that is higher than the driven gear 420.

At the time point t2, when the crank angle reaches a predetermined angle, the auxiliary motor 400 starts the driving of the driven gear 420 (Fig. 3) in the forward direction DR1, and the ISG 300 starts the driving of the crankshaft 210 (Fig. 3) in the forward direction DR1. In this case, because the output rotation speed of the crankshaft 210 in the forward direction DR1 largely fluctuates by pressure in the combustion chamber 200a (Fig. 2), inertial force and the like, the relationship between the input rotation speed and the output rotation speed is likely to change.

As shown in Fig. 6(b), when the input rotation speed of the driven gear 420 in the forward direction DR1 is higher than the output rotation speed of the crankshaft 210 in the forward direction DR1, the clutch mechanism 500 is in the connected state, so that the crankshaft 210 is integrally rotated with the driven gear 420 in the forward direction DR1. As shown in Fig. 6(c), when the output rotation speed of the crankshaft 210 in the forward direction DR1 is higher than the input rotation speed of the driven gear 420 in the forward direction DR1, the clutch mechanism 500 is in the idling state, so that the crankshaft 210 is rotated in the forward direction DR1 at a rotation speed that is higher than the driven gear 420.

At a time point t3, a first explosion occurs in the engine 200 (Fig. 2). Thus, the crankshaft 210 is driven in the forward direction DR1 by the engine 200, so that the output rotation speed of the crankshaft 210 in the forward direction DR1 is increased. Thus, the clutch mechanism 500 is likely to be in the idling state.

At a time point t4, a complete explosion occurs in the engine 200 (Fig. 2). After the occurrence of the complete explosion, the crankshaft 210 is stably driven by the engine 200. With the occurrence of the complete explosion, the driving of the driven gear 420 by the auxiliary motor 400 and the driving of the crankshaft 210 by the ISG 300 are stopped. Thus, as shown in Fig. 6(d), the clutch mechanism 500 is in the disconnected state, so that the crankshaft 210 is rotated in the forward direction DR1 by the engine 200 without receiving rotational resistance by the driven gear 420.

While the swing-back operation is performed using both of the auxiliary motor 400 and the ISG 300 in the example of Fig. 8, the swing-back operation may be performed using only one of the auxiliary motor 400 and the ISG 300 as described below.

### (7) Start-up of Engine

During the start-up of the engine 200, the controller 6 performs an engine start-up process based on a control program that is stored in the memory in advance. Specific examples of the engine start-up process will be described.

### (7-1) First Example

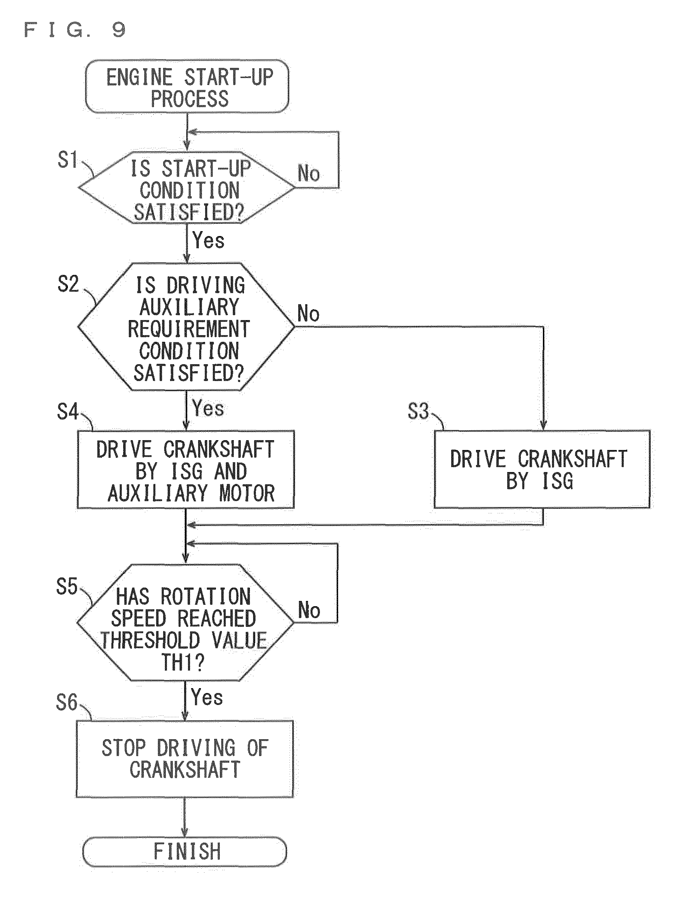

Fig. 9 is a flow chart of the first example of engine start-up process. In the example of Fig. 9, the engine 200 is stopped as an initial state.

As shown in Fig. 9, the controller 6 first determines whether a predetermined start-up condition of the engine 200 is satisfied (step S1). When the engine 200 is not in the idling stop state, the start-up condition is that the starter switch (not shown) is turned on, for example. When the engine 200 is in the idling stop state, the start-up condition is the above-mentioned idling stop release condition. The controller 6 repeats the process of step S1 until the start-up condition is satisfied.

When the start-up condition is satisfied, the controller 6 determines whether a driving auxiliary requirement condition is satisfied (step S2). The driving auxiliary requirement condition indicates that support by the auxiliary motor 400 is required in order to drive the crankshaft 210. For example, the driving auxiliary requirement condition is satisfied during cold start-up. The driving auxiliary requirement condition is that a temperature of a circulating water in the engine 200 is lower than a threshold value, or that a predetermined time period has elapsed since the engine 200 is stopped, for example.

When the driving auxiliary requirement condition is not satisfied, the controller 6 drives the crankshaft 210 by only the ISG 300 (step S3). On the other hand, when the driving auxiliary requirement condition is satisfied, the controller 6 drives the crankshaft 210 by the auxiliary motor 400 and the ISG 300 as in the example of Fig. 8 (step S4). In both of steps S3, S4, the crankshaft 210 is driven to perform the above-mentioned swing-back operation.

Next, the controller 6 determines whether the rotation speed of the crankshaft 210 in the forward direction DR1 has reached a predetermined threshold value TH1 (step S5). The threshold value TH1 is a rotation speed of the crankshaft 210 at which the complete explosion of the engine 200 occurs, for example. The rotation speed of the crankshaft 210 can be acquired based on the detection result of any one of the crank angle sensors SE1, SE2, for example.

The controller 6 repeats the process of step S5 until the rotation speed of the crankshaft 210 reaches the threshold value TH1. When the rotation speed of the crankshaft 210 reaches the threshold value TH1, the controller 6 stops the driving of the crankshaft 210 by the ISG 300 or the driving of the crankshaft 210 by the ISG 300 and the auxiliary motor 400 (step S6), and finishes the engine start-up operation.

In the present example, when startability of the engine 200 is low such as during the cold start-up and the like, the auxiliary motor 400 is auxiliarily used. Thus, the engine 200 can be stably started. On the other hand, when the startability of the engine 200 is high, the crankshaft 210 is rotated by only the ISG 300. Thus, silence during the start-up of the engine 200 is ensured.

### (7-2) Second Example

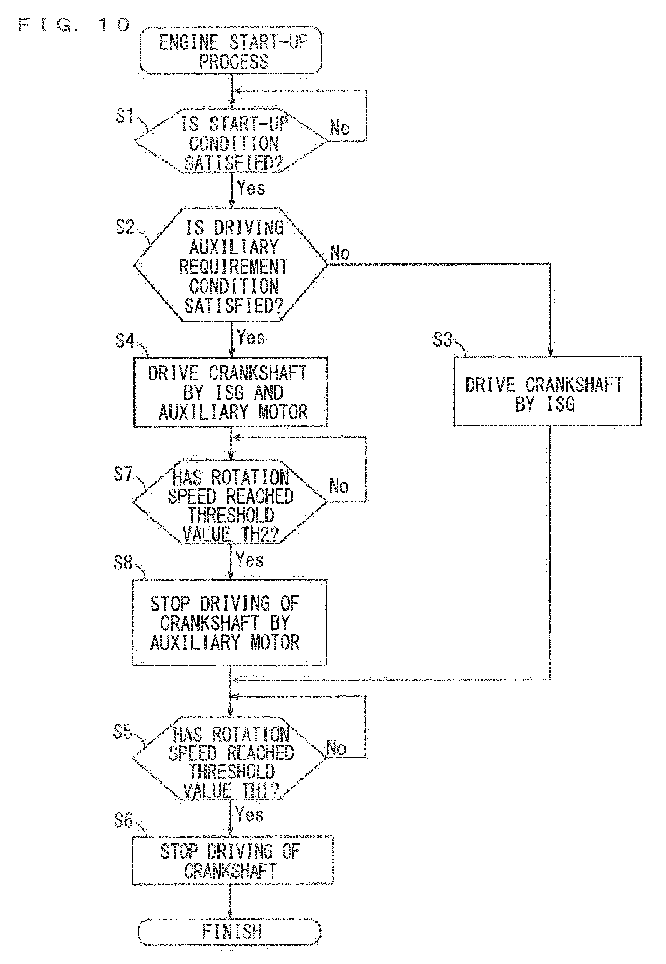

Fig. 10 is a flow chart of the second example of the engine start-up process. Regarding the example of Fig. 10, differences from the example of Fig. 9 will be described. In the example of Fig. 10, after the process of step S4, the controller 6 determines whether the rotation speed of the crankshaft 210 in the forward direction DR1 has reached a predetermined threshold value TH2 (step S7). The threshold value TH2 is smaller than the above-mentioned threshold value TH1.

The controller 6 repeats the process of step S7 until the rotation speed of the crankshaft 210 reaches the threshold value TH2. When the rotation speed of the crankshaft 210 reaches the threshold value TH2, the controller 6 stops the driving of the crankshaft 210 by the auxiliary motor 400 (step S8) and drives the crankshaft 210 by only the ISG 300. Thereafter, the controller 6 performs the processes of steps S5, S6 similarly to the example of Fig. 8.

When the rotation speed of the crankshaft 210 is increased, the rotational force that is required in order to rotate the crankshaft 210 is reduced. Therefore, in the present example, when the rotation speed of the crankshaft 210 is at the threshold value TH2, the driving of the crankshaft 210 by the auxiliary motor 400 is stopped. Thus, the engine 200 can be stably started while generation of mechanical sound by the reduction gear 450 is inhibited.

### (7-3) Third Example

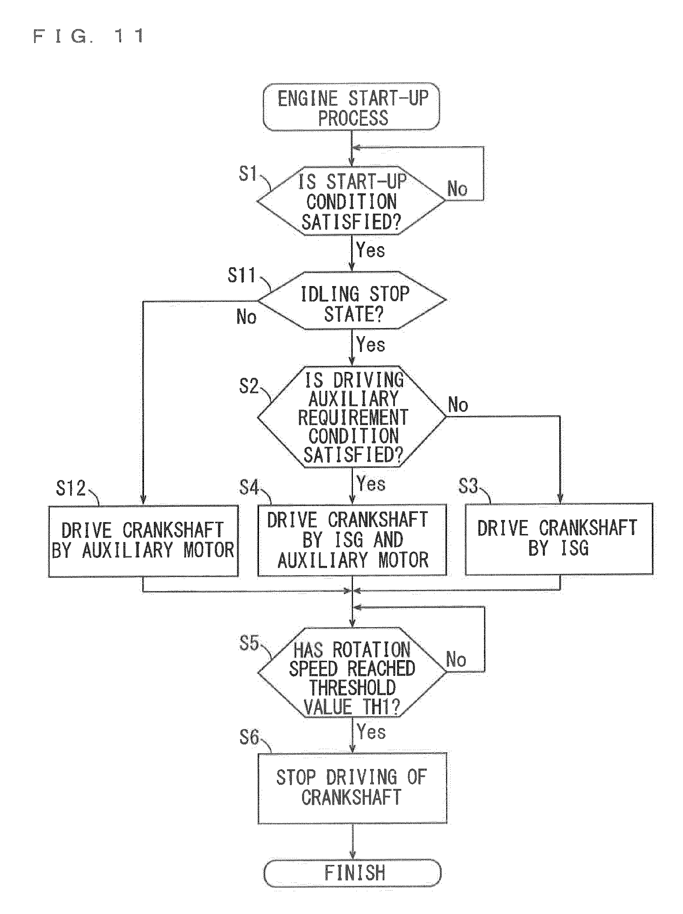

Fig. 11 is a flow chart of the third example of the engine start-up process. Regarding the example of Fig. 11, differences from the example of Fig. 9 will be described. In the example of Fig. 11, when the start-up condition is satisfied in step S1, the controller 6 determines whether the engine 200 is in the idling stop state (step S11).

When the engine 200 is in the idling stop state, the controller 6 performs the processes of steps S2 to S6 similarly to the example of Fig. 9. On the other hand, when the engine 200 is not in the idling stop state, the controller 6 drives the crankshaft 210 by only the auxiliary motor 400 (step S12). Thereafter, the controller 6 performs the processes of steps S5, S6.

The processes of steps S7, S8 of Fig. 10 may be performed between the process of step S4 and the process of step S5. Further, when the rotation speed of the crankshaft 210 becomes higher than the threshold value TH2 between step S12 and step S5, the driving of the crankshaft 210 by the auxiliary motor 400 may be stopped, and the driving of the crankshaft 210 by the ISG 300 may be started.

When the engine 200 is not in the idling stop state, request of silence during the start-up of the engine 200 is relatively small. Therefore, in the present example, when the engine 200 is not in the idling stop state, the crankshaft 210 is driven by only the auxiliary motor 400. Thus, the crankshaft 210 can be easily driven while a burden on the ISG 300 is reduced.

### (8) Effects

In the engine unit 10 according to the present embodiment, the crankshaft 210 is auxiliarily driven by the auxiliary motor 400 during the start-up of the engine 200. Thus, the rotational force, which is to be generated by the ISG 300, is small as compared to a case in which the crankshaft 210 is driven by only the ISG 300. Thus, an increase in size of the ISG 300 is inhibited, and power generation efficiency of the ISG 300 is improved.

Further, in both of the forward and reverse directions, presence and absence of transmission of the rotational force between the auxiliary motor 400 and the crankshaft 210 are switched by the clutch mechanism 500 during the swing-back operation of the crankshaft 210. Thus, the auxiliary motor 400 is prevented from being the rotational resistance to the crankshaft 210. Therefore, the rotation speed of the crankshaft 210 can be smoothly increased.

### (9) Other Embodiments

### (9-1)

While the driven gear 420 is driven in both of the forward and reverse directions by the auxiliary motor 400 in the above-mentioned embodiment, the present invention is not limited to this.

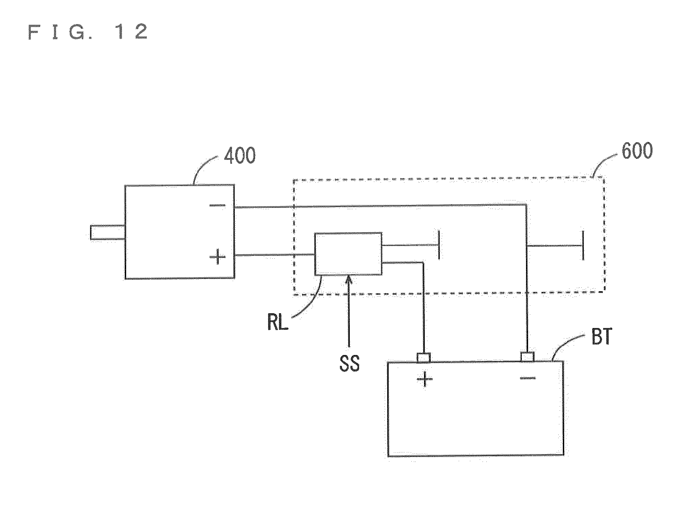

Fig. 12 is a schematic view showing a connection example of the auxiliary motor 400 to the battery BT. In the example of Fig. 12, the auxiliary motor 400 is a direct-current motor. The auxiliary motor 400 is connected to the battery BT via a power circuit 600 having two electrodes. A relay RL is provided at only one electrode of the power circuit 600 (a positive electrode in the present example).

In the power circuit 600, the positive electrode of the battery BT is connected to one terminal of the relay RL, and the positive electrode of the auxiliary motor 400 is connected to the other terminal of the relay RL. A ground terminal of the relay RL is connected to a ground line. Further, a negative electrode of the battery BT and a negative electrode of the auxiliary motor 400 are connected to the ground line.

A start-up signal SS is supplied from the controller 6 of Fig. 2 to the relay RL. The relay RL is switched on or off based on the start-up signal SS. When the relay RL is turned on, electric power is supplied from the battery BT to the auxiliary motor 400. In this case, the rotation of the driven gear 420 in the reverse direction is driven by the auxiliary motor 400. When the relay RL is turned off, the supply of the electric power to the auxiliary motor 400 is stopped. Thus, the driving of the driven gear 420 by the auxiliary motor 400 is stopped.

In the present example, the auxiliary motor 400 is operated during only rotation of the crankshaft 210 in the reverse direction in the swing-back operation, and the auxiliary motor 400 is stopped during the rotation of the crankshaft 210 in the forward direction.

At the start of the rotation of the crankshaft 210, relatively large driving force is required. Therefore, in the present example, the auxiliary motor 400 is used during only the rotation of the crankshaft 210 in the reverse direction in the swing-back operation. When kinetic energy of the engine 200 is increased, the auxiliary motor 400 is stopped. Thereafter, the crankshaft 210 is rotated in the forward direction by the driving force that is generated by the ISG 300 and the engine 200, and another driving force such as inertial force.

In this manner, the power circuit 600 is configured such that the auxiliary motor 400 rotates the driven gear 420 in only the reverse direction, whereby the required number of relays is reduced and the power circuit 600 can be simplified. Thus, the control of relay becomes easier, and the size of the power circuit 600 can be reduced.

### (9-2)

While the swing-back operation of the crankshaft 210 is performed during every start-up of the engine 200 in the above-mentioned embodiment, the swing-back operation of the crankshaft 210 may be performed only under a constant condition. For example, right after the stop of the engine 200, a temperature in the engine 200 is high, and the rotational resistance to the crankshaft 210 is small. In such a case, the engine 200 may be started without the swing-back operation.

### (9-3)

While the above-mentioned embodiment is an example in which the present invention is applied to the motorcycle, the invention is not limited to this. The present invention may be applied to another straddle-type vehicle such as a motor tricycle, an ATV (All Terrain Vehicle) or the like.

### (10) Correspondences between Constituent Elements in Claims and Parts in Preferred Embodiments

In the following paragraphs, non-limiting examples of correspondences between various elements recited in the claims below and those described above with respect to various preferred embodiments of the present invention are explained.

In the present example, the engine unit 10 is an example of an engine unit, the engine 200 is an example of an engine, the ISG 300 is an example of an integrated starter generator, the crankshaft 210 is an example of a crankshaft, the auxiliary motor 400 is an example of a motor, the reduction gear 450 is an example of a reduction gear and the clutch mechanism 500 is an example of a clutch mechanism.

Further, the casing 350 is an example of a casing, the driven gear 420 is an example of an input rotation member, the fixing plate 51 is an example of a fixing member, the roller holder 52 and the roller 54 are examples of a transmitter, the driven gear 420 is an example of a first gear, the pinion gear 410 is an example of a second gear, the controller 6 is an example of a controller, the crank angle sensors SE1, SE2 are examples of a detector, the battery BT is an example of a power supplier and the relay RL is an example of a relay. Further, the motorcycle 100 is an example of a straddle-type vehicle, the rear wheel 7 is an example of a drive wheel and the vehicle body 1 is an example of a main body.

As each of constituent elements recited in the claims, various other elements having configurations or functions described in the claims can be also used.

### INDUSTRIAL APPLICABILITY

The present invention can be effectively utilized for various types of engine units.

## Claims

1. An engine unit (10) comprising:
an engine (200);
an integrated starter generator (300) that is provided at a crankshaft (210) of the engine (200) and has a function for rotating the crankshaft (210) and a function for generating electric power by rotation of the crankshaft (210); and
a motor (400) for rotating the crankshaft (210), wherein
the integrated starter generator (300) is configured to rotate the crankshaft (210) in a forward direction after rotating the crankshaft (210) in a reverse direction during start-up of the engine (200),
the motor (400) is connected to the crankshaft (210) via a reduction gear (450) and a clutch mechanism (500) and is configured to rotate the crankshaft (210) in at least the reverse direction during the start-up of the engine (200), and
the clutch mechanism (500) is configured to be switched between a state in which a rotational force of the motor (400) in the forward direction is transmitted to the crankshaft (210) and a state in which the rotational force of the motor (400) in the forward direction is not transmitted to the crankshaft (210), and is configured to be switched between a state in which a rotational force of the motor (400) in the reverse direction is transmitted to the crankshaft (210) and a state in which the rotational force of the motor (400) in the reverse direction is not transmitted to the crankshaft (210).

2. The engine unit (10) according to claim 1, wherein
the engine unit (10) has a casing (350) configured to store the crankshaft (210) and the clutch mechanism (500),
the clutch mechanism (500) includes
an input rotation member (420) configured to be rotated in conjunction with rotation of the motor (400),
a fixing member (51) that is fixed to the casing (350), and
a transmitter (52, 54) that is provided to be rotated together with the input rotation member (420) while receiving rotational resistance from the fixing member (51), and
the transmitter (52, 54) is configured to be
operated during rotation of the input rotation member (420) in the forward direction to prevent rotation of the crankshaft (210) in the reverse direction relative to the input rotation member (420) by the rotational resistance that is applied from the fixing member (51), and not to prevent rotation of the crankshaft (210) in the forward direction relative to the input rotation member (420), and
operated during rotation of the input rotation member (420) in the reverse direction to prevent the rotation of the crankshaft (210) in the forward direction relative to the input rotation member (420) by the rotational resistance that is applied from the fixing member (51), and not to prevent the rotation of the crankshaft (210) in the reverse direction relative to the input rotation member (420).

3. The engine unit (10) according to claim 2, wherein
the input rotation member includes a first gear (420),
a second gear (410) is attached to an output shaft (400a) of the motor (400), and
the first gear (420) is engaged with the second gear (410) such that the reduction gear (450) is constituted.

4. The engine unit (10) according to any one of claims 1 to 3, further comprising a controller (6) configured to control the motor (400) and the integrated starter generator (300) during the start-up of the engine (200) such that the crankshaft (210) is rotated in the forward direction after being rotated in the reverse direction by at least the motor (400) in a case in which a predetermined condition is satisfied, and configured to control the motor (400) and the integrated starter generator (300) during the start-up of the engine (200) such that the crankshaft (210) is rotated in the forward direction after being rotated in the reverse direction by the integrated starter generator (300) in a case in which the condition is not satisfied.

5. The engine unit (10) according to any one of claims 1 to 3, further comprising:
a detector (SE1, SE2) configured to detect a rotation speed of the crankshaft (210); and
a controller (6) configured to control the motor (400) and the integrated starter generator (300) during the start-up of the engine (200) such that the crankshaft (210) is rotated by at least the motor (400) in a period in which the rotation speed detected by the detector (SE1, SE2) is smaller than a predetermined threshold value, and configured to control the motor (400) and the integrated starter generator (300) during the start-up of the engine (200) such that the crankshaft (210) is rotated by the integrated starter generator (300) after the rotation speed detected by the detector (SE1, SE2) reaches the predetermined threshold value.

6. The engine unit (10) according to any one of claims 1 to 5, wherein
the motor (400) is a direct-current motor (400) and connected to a power supplier (BT) through a power circuit having two electrodes, and
a relay (RL) is provided at only one electrode of the power circuit, and electrical power is supplied from the power supplier (BT) to the motor (400) such that the motor (400) is rotated in the reverse direction by turning on the relay (RL).

7. A straddle-type vehicle (100) comprising:
a main body (1) having a drive wheel (7); and
an engine unit (10), according to any one of claims 1 to 6, configured to generate a driving force for moving the main body (1).
